# EUROPÄISCHE PATENTSCHRIFT

(11) **EP 3 124 170 B1**
(45) Veröffentlichungstag und Bekanntmachung des Hinweises auf die Patenterteilung: **20.11.2019**
(21) Anmeldenummer: 15178448.5
(22) Anmeldetag: 27.07.2015
(51) Int. Cl.: B23Q 3/155, B23Q 3/157

(54) **KETTENMAGAZIN ZUR AUFNAHME VON WERKZEUGEN**
CHAIN CARTRIDGE FOR HOLDING TOOLS
MAGASIN A CHAINE POUR LA RECEPTION D'OUTILS

(43) Veröffentlichungstag der Anmeldung: 01.02.2017
(73) Patentinhaber: GF Machining Solutions AG, 3550 Langnau im Emmental (CH)
(72) Erfinder: Scheidegger, Andreas, 3510 Konolfingen (CH); Haueter, Ernst, 3533 Bowil (CH)
(74) Vertreter: Fenner, Seraina

(56) Entgegenhaltungen:
- GB-A- 1 251 064
- GB-A- 2 078 567
- JP-A- 2003 019 635
- JP-A- 2010 137 322
- US-A- 5 554 087
- US-B1- 7 575 543

## Beschreibung

Die Erfindung betrifft ein Kettenmagazin zur Aufnahme von Werkzeugen gemäss Oberbegriff des Anspruchs 1 (siehe z.B. GB1251064A).

Derartige Kettenmagazine dienen dazu, eine Vielzahl von Werkzeugen bereitzustellen, die für die verschiedenen Bearbeitungsaufgaben von Werkzeugmaschinen benötigt werden. Ein Werkzeugwechsel an der Werkzeugmaschine erfolgt z.B. mittels eines Doppelgreifers, an dessen beiden Armenenden jeweils ein Werkzeug aufnehmbar ist. Wird der Doppelgreifer rotiert, um ein Werkzeug aus dem Kettenmagazin zu entnehmen oder in dieses einzuführen, so kann es zu einer Kollision mit benachbarten Werkzeugen kommen. Dies kann verhindert werden, indem hinreichend grosse Abstände zwischen den Werkzeugaufnahmen vorgesehen werden, so dass genügend Platz für einen Zugriff gegeben ist, siehe z.B. die Anmeldung EP 2 308 637 A2. Ein derartiger Aufbau hat jedoch den Nachteil, dass das Kettenmagazin einen relativ voluminösen Aufbau aufweist.

Aus der Anmeldung EP 0 636 056 A1 ist es bekannt, die Werkzeugaufnahmen jeweils durch zwei radial offen ausgestalte Hülsen zu bilden. Dadurch ist ein Werkzeug durch Verschieben in der Ebene, in welcher die Kette verläuft, entnehmbar bzw. einführbar. Allerdings sind spezielle Massnahmen vorzusehen, welche verhindern, dass ein Werkzeug, wenn es in der Werkzeugaufnahme gelagert wird, herausfallen kann. Dies macht den Aufbau des Kettenmagazins relativ kompliziert.

Ausgehend von diesem Stand der Technik liegt der Erfindung die Aufgabe zu Grunde, ein Kettenmagazin vorzuschlagen, das einen kompakteren Aufbau aufweist.

Ein Kettenmagazin, das diese Aufgabe löst, ist im Anspruch 1 angegeben. Die weiteren Ansprüche geben besondere Ausführungsarten an sowie eine Werkzeugmaschine mit einem Kettenmagazin und eine Verwendung desselben.

Das Kettenmagazin ist kompakt ausgestaltbar durch das Vorsehen einer Führungseinrichtung, die ein zwischen einer ersten und einer zweiten Position hin und her bewegbares Führungselement aufweist, mittels welchem eine Werkzeugaufnahme eines Kettenglieds aus- und einlenkbar ist. In der ausgelenkten Stellung einer Werkzeugaufnahme kann seitlich Platz geschaffen werden, um einen kollisionsfreien Zugriff z.B. eines Greifers zu ermöglichen. Die Führungseinrichtung erlaubt ein einfaches und rasches Ein- und Auslagern von Werkzeugen.

Vorzugsweise weist das Führungselement zwei Aufnahmeplätze für Werkzeugaufnahmen auf und ist um eine Schwenkachse schwenkbar, die mit einer Gelenkachse eines im Führungselement angeordneten Kettenglieds zusammenfällt. Diese Ausgestaltung ermöglicht einen besonders einfachen Aufbau des Kettenmagazins.

Ein Ausführungsbeispiel der Erfindung wird nachstehend unter Bezugnahme auf die angefügten Zeichnungen beschrieben. Es zeigen
Fig. 1 ein Kettenmagazin in einer Seitenansicht in der Grundstellung,
Fig. 2 das Kettenmagazin aus Fig. 1 mit ausgelenktem Kettenglied,
Fig. 3 eine Seitenansicht der Führungseinrichtung für das Kettenmagazin aus Fig. 1 mit einem stationären und einem schwenkbaren Führungselement,
Fig. 4 die Ansicht gemäss Fig. 3, wobei sich das schwenkbare Führungselement in der geschwenkten Stellung befindet,
Fig. 5 eine Stirnansicht des stationären Führungselements aus Fig. 3, und
Fig. 6 das schwenkbare Führungselement geschnitten entlang der Linie VI-VI gemäss Fig. 3.

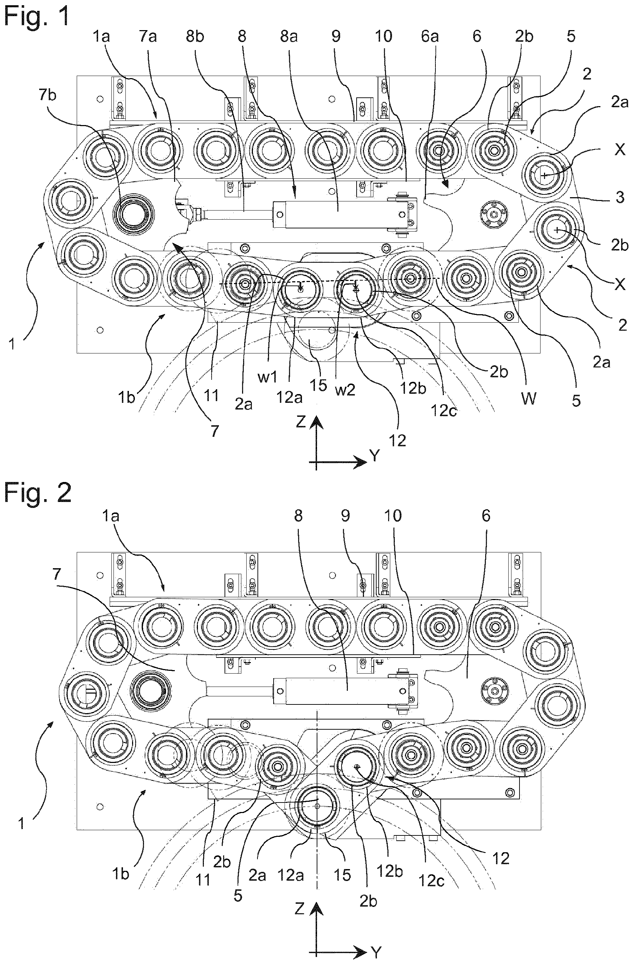

Fig. 1 zeigt ein Kettenmagazin mit einer endlos umlaufenden Kette 1, die gelenkig miteinander verbundene Kettenglieder 2, 3 aufweist. Ein Kettenglied 2 enthält eine erste und zweite Werkzeugaufnahme 2a, 2b, welche jeweils zur Aufnahme eines Werkzeugs 5 dienen und z.B. in Form eines Aufnahmeköchers ausgebildet sind. Eine jeweilige Werkzeugaufnahme 2a, 2b ist mit einem Gelenk versehen, an welche ein Verbindungsglied 3 gekoppelt ist, das benachbarte Kettenglieder 2 miteinander verbindet. Ein Kettenglied 2 ist in Bezug auf ein daran gekoppeltes Verbindungsglied 3 um eine Achse X schwenkbar, welche durch die Werkzeugaufnahme 2a bzw. 2b hindurch verläuft und senkrecht auf der YZ-Ebene steht, in welcher die Kette 1 als Ganzes umlaufend bewegbar ist. In der Darstellung gemäss Fig. 1 steht die Achse X senkrecht auf der Blattebene. Eine Werkzeugaufnahme 2a, 2b ist umlaufend ausgebildet, so dass ein Werkzeug durch Verschieben in der Achse X entnehmbar bzw. zuführbar ist.

Die Kette 1 verläuft im vorliegenden Ausführungsbeispiel um zwei Kettenräder 6, 7. Es ist denkbar, nur bei der einen Umlenkstelle ein Kettenrad vorzusehen, während die andere Umlenkstelle durch ein stationäres Führungselement gebildet ist, über welches hinweg die Kette 1 rutschen kann und welches z.B. eine besonders glatte und beständige Oberfläche aufweist. Im Weiteren sind auch Ausführungsbeispiele möglich, bei denen die Kette 1 um drei, vier oder mehr Kettenräder verläuft, um eine Bahn mit mehr als zwei Umlenkstellen zu bilden.

Ein jeweiliges Kettenrad 6, 7 weist Zähne 6a, 7b auf, die in Eingriff mit der Kette 1 stehen. Wenigstens eines der Kettenräder, hier Kettenrad 6, ist antreibbar und ist zu diesem Zweck mit einem (nicht dargestellten) Kettenantrieb verbunden. Wie weiter unten erläutert, ist eine schaltbare Umlenkstelle vorgesehen, so dass die Abmessungen der Bahn der Kette 1 veränderlich sind. Um derartige Veränderungen auszugleichen, ist wenigstens eines der Kettenräder sowohl dreh- als auch verschiebbar gelagert. Dadurch kann unabhängig vom Schaltzustand besagter Umlenkstelle gewährleistet werden, dass die Kette 1 hinreichend gespannt bleibt und immer ein genügender Eingriff der Kettenräder in die Kette 1 gegeben ist.

Im vorliegenden Ausführungsbeispiel ist die Achse 7b des Kettenrads 7, um welche dieses drehbar ist, in der Y-Achse hin und her verschiebbar gelagert. Dadurch ist der Abstand zwischen den Kettenrädern 6 und 7 veränderbar. Zum Verschieben des Kettenrads 7 dient ein Linearantrieb 8, welcher ein stationär montiertes Gehäuse 8a sowie eine verschiebbare Verstellstange 8b aufweist, die an die Achse 7b des Kettenrads 7 gekoppelt ist. Als Linearantrieb 8 ist z. B. ein pneumatischer Antrieb verwendbar.

In Fig. 1 ist weiter eine Führungseinrichtung 9-12 für die Kette 1 dargestellt. Hier umfasst die Führungseinrichtung Führungselemente 9, 10, welche auf den gemäss Fig. 1 oberen Strang 1a der Kette 1 wirken, sowie Führungselemente 11, 12, welche auf den gemäss Fig. 1 unteren Strang 1b der Kette 1 wirken. Die Führungselemente 9, 10 sind in Form von Schienen ausgebildet, zwischen welchen hindurch die Kette 1 verläuft. Die in Fig. 1 gezeigte Anordnung ist so ausgelegt, dass die Z-Achse in der Vertikalen verläuft und somit die Gewichtskraft in dieser Achse wirkt. Die Führungsschiene 10 ist hier so ausgelegt, dass sie nebst der Führung auch zur Abstützung der Kette 1 und der darin aufgenommenen Werkzeuge 5 geeignet ist. Je nach Anwendung kann das Kettenmagazin auch anders orientiert angeordnet sein. Entsprechend wird ein jeweiliges Führungselement 9, 10 anders ausgestaltet, ergänzt oder unter Umständen ganz weggelassen.

Das Führungselement 11 ist stationär angeordnet und ausgelegt, die Position des Kettenstrangs 1b in Bezug auf das Führungselement 12 zu definieren, welches schwenkbar ausgestaltet und zu diesem Zweck an einen (nicht dargestellten) Antrieb gekoppelt ist. Die Schwenkachse 12c des Führungselements 12 zeigt in Richtung der Achse X eines Kettenglieds 2. Das Führungselement 12 dient als schaltbare Umlenkstelle, so dass ein beliebiges Kettenglied 2 und somit eine Werkzeugaufnahme 2a oder 2b ausgelenkt werden kann, um diese für die Handhabung eines Werkzeugs 5 besser zugänglich zu machen.

Das Führungselement 12 weist einen ersten Aufnahmeplatz 12a, an welcher eine Werkzeugaufnahme 2a oder 2b positionierbar ist, und einen zweiten Aufnahmeplatz 12b, an welcher eine benachbarte Werkzeugaufnahme 2b bzw. 2a positionierbar ist. Der erste Aufnahmeplatz 12a ist zusammen mit der dort positionierten Werkzeugaufnahme 2a oder 2b aus- und einlenkbar, während der zweite Aufnahmeplatz 12b zusammen mit der dort positionierten Werkzeugaufnahme 2b bzw. 2a um die Schwenkachse 12c schwenkbar ist. In der Darstellung gemäss Fig. 1 sind die beiden Aufnahmeplätze 12a, 12b durch Werkzeugaufnahmen 2a, 2b desselben Kettenglieds 2 besetzt, so dass die Werkzeugaufnahme 2a aus- und einlenkbar ist. Soll eine Werkzeugaufnahme 2b aus- und eingelenkt werden, so gehören die Werkzeugaufnahmen 2a, 2b in den beiden Aufnahmeplätzen 12a, 12b zu zwei benachbarten Kettengliedern 2.

Bei der schaltbaren Umlenkstelle befindet sich die Übergabestation 15, an welcher ein Werkzeug 5 aus einer Werkzeugaufnahme 2a, 2b entnehmbar bzw. in eine solche einführbar ist.

Der Winkel, um welchen das Führungselement 12 schwenkbar ist, ist an den Anwendungszweck des Kettenmagazins ausgelegt und kann mindestens 20 Grad, bevorzugt mindestens 30 Grad, und besonders bevorzugt mindestens 40 Grad betragen.

Beim Ausführungsbeispiel gemäss Fig. 1 weist der untere Kettenstrang 1b einen ungeraden Verlauf auf, so dass bereits in der nicht-ausgelenkten Grundstellung des Führungselements 12 ein Versatz der in den Aufnahmeplätzen 12a, 12b aufgenommenen Werkzeugaufnahmen 2a, 2b gegeben ist. In der Fig. 1 ist die Achse, welche durch die Zentren der dazu benachbarten Werkzeugaufnahmen verläuft, durch die gestrichelte Linie W angegeben. Die Werkzeugaufnahme 2a im Aufnahmeplatz 12a hat einen Versatz w1 zur Achse W, die Werkzeugaufnahme 2b im Aufnahmeplatz 12b einen Versatz w2. Dieser ungerade Verlauf des Kettenstrangs 1b und somit der Versatz der Werkzeugaufnahmen 2a, 2b bewirkt, dass bereits in der nicht-ausgelenkten Grundstellung zusätzlicher Platz geschaffen wird, um einen kollisionsfreien Zugang zu erleichtern.

Besonders viel Platz ergibt sich in der Stellung, in welcher sich das Führungselement 12 in der verschwenkten Position befindet, wie dies in Fig. 2 dargestellt ist. Die Werkstückaufnahme, hier 2a, mit dem gewünschten Werkzeug 5 ist ausgelenkt und befindet sich bei der Übergabestation 15. Der Abstand zwischen den beiden benachbarten Werkstückaufnahmen, hier 2b, ist verkürzt, was durch ein Verschieben des Kettenrads 7 in der Y-Richtung ausgeglichen ist. Die Auslenkung der Werkstückaufnahme bewirkt, dass diese quer zur Bewegungsrichtung Y, in welcher der Kettenstrang 1b bewegbar ist, verschoben wird, wodurch seitlich der ausgelenkten Werkstückaufnahme besonders umfassend Raum geschaffen wird, um einen kollisionsfreien Zugriff z.B. eines Greifers zu ermöglichen.

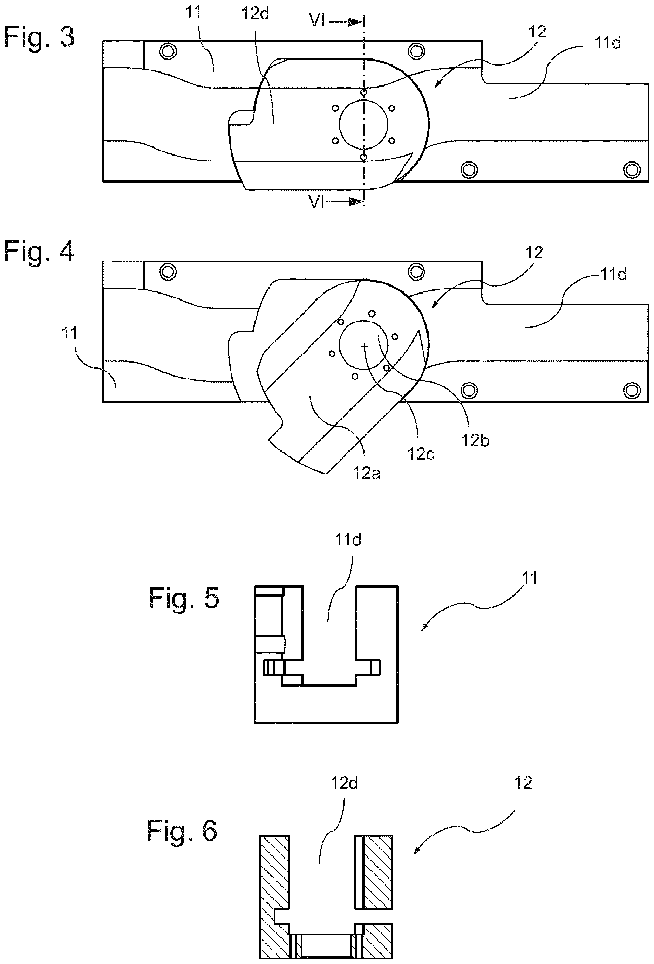

Fig. 3 und 4 zeigen die Führungselemente 11, 12 ohne Kette 1. Das jeweilige Führungselement 11, 12 weist einen Führungskanal 11d bzw. 12d auf (vgl. auch Fig. 5 und 6). Im Betrieb werden die Werkzeugaufnahmen 2a, 2b der Kette 1 zusammen mit den darin aufgenommenen Werkzeugen 5 durch den Führungskanal 11d, 12d hindurch verschoben. Wie aus Fig. 3 ersichtlich bilden die Führungskanäle 11d, 12d im nicht-ausgelenkten Zustand des Führungselements 12 einen durchgehenden Kanal, der einen versetzten Zwischenabschnitt aufweist und der somit von einem geraden Verlauf abweicht. Dadurch ergibt sich der oben erwähnte Versatz w1 und w2 der Werkzeugaufnahmen, die sich beim Aufnahmeplatz 12a bzw. 12b befinden. Je nach Anwendungszweck ist es auch denkbar, diese versetzte Ausgestaltung wegzulassen und die Führungskanäle 11d, 12d so auszugestalten, dass sich ein Kanal mit geradem Verlauf ergibt.

Der Betrieb des Kettenmagazins ist z.B. wie folgt:
Die Kette 1 wird so weit bewegt, bis sich am ersten Aufnahmeplatz 12a des Führungselements 12 die Werkzeugaufnahme 2a, 2b mit dem gewünschten Werkzeug 5 befindet. Im zweiten Aufnahmeplatz 12b ist eine dazu benachbarte Werkzeugaufnahme 2a, 2b angeordnet, so dass ihre Achse X mit der Schwenkachse 12c zusammenfällt. Die Werkzeugaufnahme 2a, 2b im zweiten Aufnahmeplatz 12b wird bei der Betätigung des Führungselements 12 um die Schwenkachse 12c gedreht. Gleichzeitig wird die Werkzeugaufnahme 2a, 2b beim ersten Aufnahmeplatz 12a ausgelenkt und das darin gelagerte Werkzeugs 5 für eine Handhabungseinrichtung zugänglich gemacht. Um die Auslenkung zu ermöglichen, wird das Kettenrad 7 in Y-Richtung verschoben.

Die Handhabungseinrichtung umfasst z.B. einen Doppelgreifer, der einen rotierbaren Hebel aufweist, an dessen beiden Enden jeweils ein Greifer für die Aufnahme eines Werkzeugs angeordnet ist. Bei einem Einsatz beim Ausführungsbeispiel gemäss Fig. 2 ist der Doppelgreifer um die X-Achse drehbar sowie in der X- und Z-Achse verfahrbar. Er wird so verfahren, dass der eine Greifer das Werkzeug 5 in der Übergabestation 15 ergreifen kann. Die Entnahme des Werkzeugs 5 aus dem Kettenmagazin erfolgt durch Verschieben des Greifers in der X-Achse und somit axial zur Werkstückaufnahme 12a, 12b. Anschliessend wird der Doppelgreifer gedreht, typischerweise um 180 Grad, so dass der andere Greifer mit einem zu lagernden Werkzeug bei der Übergabestation 15 zu liegen kommt. Durch axiales Verschieben wird dieses Werkzeug schliesslich der Werkstückaufnahme 12a, 12b zugeführt.

Das Kettenmagazin erlaubt eine kompakte Auslegung und ist vielfältig einsetzbar, z.B. bei Maschinen für eine spanabhebende Bearbeitung, um effizient Werkzeuge auszuwechseln.

Aus der vorangehenden Beschreibung sind dem Fachmann zahlreiche Abwandlungen zugänglich, ohne den Schutzbereich der Erfindung zu verlassen, der durch die Ansprüche definiert ist.

**Bezugszeichenliste**

| | | | |
|---|---|---|---|
| 1 | Kette | 8a | Gehäuse |
| 1a | Kettenstrang | 8b | Verstellstange |
| 1b | Kettenstrang | 9 | Führungselement |
| 2 | Kettenglied | 10 | Führungselement |
| 2a | erste Werkzeugaufnahme | 11 | Führungselement |
| 2b | zweite Werkzeugaufnahme | 11d | Führungskanal |
| 3 | Verbindungsglied | 12 | Führungselement |
| 5 | Werkzeug | 12a | Aufnahmeplatz |
| 6 | Kettenrad | 12b | Aufnahmeplatz |
| 6a | Zahn | 12c | Schwenkachse |
| 7 | Kettenrad | 12d | Führungskanal |
| 7a | Zahn | 15 | Übergabestation |
| 7b | Drehachse | | |
| 8 | Linearantrieb | | |

## Patentansprüche

1. Kettenmagazin zur Aufnahme von Werkzeugen (5) für eine Werkzeugmaschine, insbesondere von Werkzeugen für eine spanabhebende Bearbeitung, umfassend eine endlose Kette (1), welche Kettenglieder (2) mit jeweils mindestens einer Werkzeugaufnahme (2a, 2b) aufweist und mit welcher mindestens ein Kettenrad (6, 7) in Eingriff steht, das antreibbar ist, und eine Führungseinrichtung (9-12) zur Führung der Kette, wobei die Führungseinrichtung (9-12) ein zwischen einer ersten und einer zweiten Position hin und her bewegbares Führungselement (12) aufweist, mittels welchem eine Werkzeugaufnahme (2a, 2b) eines Kettenglieds (2) aus- und einlenkbar ist, **dadurch gekennzeichnet, dass** das Führungselement (12) um eine Schwenkachse (12c) schwenkbar angeordnet ist und die Schwenkachse (12c) mit einer Gelenkachse (X) eines im Führungselement (12) angeordneten Kettenglieds (2) zusammenfällt.

2. Kettenmagazin nach Anspruch 1, welches ein mit der Kette (1) in Eingriff stehendes Kettenrad (7) aufweist, dessen Achse (7b) verschiebbar angeordnet ist.

3. Kettenmagazin nach Anspruch 2, welches zum Verschieben der Achse (7b) einen Linearantrieb (8) aufweist.

4. Kettenmagazin nach einem der vorangehenden Ansprüche, wobei das Führungselement (12) einen ersten Aufnahmeplatz (12a) zur Aufnahme und zum Aus- und Einlenken einer ersten Werkzeugaufnahme (2a, 2b) und einen zweiten Aufnahmeplatz (12b) zur Aufnahme einer zweiten Werkzeugaufnahme (2a, 2b) aufweist, welche zur ersten Werkzeugaufnahme benachbart und zusammen mit dem Führungselement (12) schwenkbar oder linear verschiebbar ist.

5. Kettenmagazin nach Anspruch 4, wobei benachbart zur ersten und zweiten Werkzeugaufnahme (2a, 2b) dritte und vierte Werkzeugaufnahmen (2a, 2b) angeordnet sind, deren Zentren auf einer Achse W liegen, wobei die Kette (1) in der eingelenkten Stellung des Führungselements (12) zwischen der dritten und vierten Werkzeugaufnahme einen ungeraden Verlauf aufweist, indem die ersten und zweiten Werkzeugaufnahmen verschoben (w1, w2) zur Achse W sind.

6. Kettenmagazin nach einem der vorangehenden Ansprüche, wobei eine jeweilige Werkzeugaufnahme (2a, 2b) eingerichtet ist, ein Werkzeug einzuführen bzw. zu entnehmen durch Verschieben quer zur Ebene (YZ), in welcher die Kette (1) verläuft, vorzugsweise ist die jeweilige Werkzeugaufnahme (2a, 2b) als Köcher ausgebildet.

7. Kettenmagazin nach einem der vorangehenden Ansprüche, wobei das jeweilige Kettenglied (2) mindestens zwei Werkzeugaufnahmen (2a, 2b) aufweist.

8. Werkzeugmaschine mit einem Kettenmagazin nach einem der vorangehenden Ansprüche.

9. Verwendung eines Kettenmagazins nach einem der Ansprüche 1 bis 7 zur Lagerung und zum Wechsel von Werkzeugen für eine Werkzeugmaschine.

10. Verwendung nach Anspruch 9, wobei der Wechsel mittels eines Doppelgreifers erfolgt.

11. Verwendung nach Anspruch 9 oder 10, wobei ein Werkzeug (5) durch Verschieben quer zur Ebene (YZ), in welcher die Kette (1) verläuft, aus einer Werkzeugaufnahme (2a, 2b) entnommen oder in diese eingeführt wird.

## Claims

1. Chain magazine for holding tools (5) for a machine tool, in particular tools for machining, comprising a continuous chain (1) which has chain links (2) each with at least one tool holder (2a, 2b) and with which at least one sprocket (6, 7) which is drivable meshes and a guide device (9-12) for guiding the chain, wherein the guide device (9-12) has a guide element (12) that can be moved back and forth between a first and a second position, by means of which a tool holder (2a, 2b) of a chain link (2) can be turned in and turned out, **characterized in that** the guide element (12) is arranged pivotably about a pivoting axis (12c) and the pivoting axis (12c) coincides with an axis of articulation (X) of a chain link (2) arranged in the guide element (12).

2. Chain magazine according to Claim 1, which has a sprocket (7) meshed with the chain (1), the axis (7b) whereof is arranged displaceably.

3. Chain magazine according to Claim 2, which has a linear drive (8) to displace the axis (7b).

4. Chain magazine according to one of the preceding claims, wherein the guide element (12) has a first holding space (12a) for holding and for turning a first tool holder (2a, 2b) in and out and a second holding space (12b) for holding a second tool holder (2a, 2b) which is adjacent to the first tool holder and is displaceable pivotably or linearly along with the guide element (12).

5. Chain magazine according to Claim 4, wherein third and fourth tool holders (2a, 2b) are arranged adjacent to the first and second tool holder (2a, 2b), the centres whereof lie on an axis W, wherein the chain (1) has an uneven course in the turned-in position of the guide element (12) between the third and fourth tool holder, in that the first and second tool holders are displaced (w1, w2) to the axis W.

6. Chain magazine according to one of the preceding claims, wherein a respective tool holder (2a, 2b) is set up for the introduction or removal of a tool by displacement transversely to the plane (YZ) in which the chain (1) runs, the respective tool holder (2a, 2b) preferably being designed as a quiver.

7. Chain magazine according to one of the preceding claims, wherein the chain link (2) in each case has at least two tool holders (2a, 2b).

8. Machine tool with a chain magazine according to one of the preceding claims.

9. Use of a chain magazine according to one of Claims 1 to 7 for storing and changing tools for a machine tool.

10. Use according to Claim 9, wherein the changeover takes place by means of a double gripper.

11. Use according to Claim 9 or 10, wherein a tool (5) is removed from or introduced into a tool holder (2a, 2b) through displacement transversely to the plane (YZ) in which the chain (1) runs.

## Revendications

1. Magasin à chaîne destiné à recevoir des outils (5) d'une machine-outil, en particulier des outils d'usinage avec enlèvement de copeaux, ledit magasin à chaîne comprenant une chaîne sans fin (1) qui comporte des maillons de chaîne (2) pourvus chacun d'au moins un logement d'outil (2a, 2b) et avec laquelle au moins un pignon (6, 7) est en engagement d'entraînement, et un dispositif de guidage (9-12) destiné à guider la chaîne, le dispositif de guidage (9-12) comportant un élément de guidage (12) qui peut être déplacé suivant un mouvement alternatif entre une première position et une deuxième position et au moyen duquel un logement d'outil (2a, 2b) d'un maillon de chaîne (2) peut être inséré et sorti, **caractérisé en ce que** l'élément de guidage (12) est disposé de manière à pouvoir pivoter sur un axe de pivotement (12c) et **en ce que** l'axe de pivotement (12c) coïncide avec un axe d'articulation (X) d'un maillon de chaîne (2) disposé dans l'élément de guidage (12).

2. Magasin à chaîne selon la revendication 1, **caractérisé en ce qu'**il comporte un pignon (7) qui est en engagement avec la chaîne (1) et dont l'axe (7b) est disposé de manière coulissante.

3. Magasin à chaîne selon la revendication 2, **caractérisé en ce qu'**il comporte un entraînement linéaire (8) destiné à faire coulisser l'axe (7b).

4. Magasin à chaîne selon l'une des revendications précédentes, l'élément de guidage (12) comportant un premier emplacement de réception (12a) destiné à recevoir et à faire rentrer et sortir un premier logement d'outil (2a, 2b) et un deuxième emplacement de réception (12b) destiné à recevoir un deuxième logement d'outil (2a, 2b), adjacent au premier logement d'outil et pouvant pivoter ou coulisser linéairement conjointement avec l'élément de guidage (12).

5. Magasin à chaîne selon la revendication 4, des troisième et quatrième logements d'outil (2a, 2b), dont les centres sont situés sur un axe W, étant disposés de manière adjacente aux premier et deuxième logements d'outil (2a, 2b), la chaîne (1) ayant une allure non rectiligne lorsque l'élément de guidage (12) est en position insérée entre les troisième et quatrième logements d'outil du fait que les premier et deuxième logements d'outil sont coulissés (w1, w2) par rapport à l'axe W.

6. Magasin à chaîne selon l'une des revendications précédentes, un logement d'outil respectif (2a, 2b) étant conçu pour introduire ou retirer un outil par coulissement transversal par rapport au plan (YZ) dans lequel la chaîne (1) s'étend, de préférence le logement d'outil (2a, 2b) étant en forme d'étui.

7. Magasin à chaîne selon l'une des revendications précédentes, le maillon de chaîne respectif (2) comportant au moins deux logements d'outil (2a, 2b).

8. Machine-outil comportant un magasin à chaîne selon l'une des revendications précédentes.

9. Utilisation d'un magasin à chaîne selon l'une des revendications 1 à 7 pour stocker et remplacer des outils d'une machine-outil.

10. Utilisation selon la revendication 9, le remplacement se faisant au moyen d'un élément de préhension double.

11. Utilisation selon la revendication 9 ou 10, un outil (5) étant retiré du logement d'outil (2a, 2b), ou inséré dans celui-ci, par coulissement transversal par rapport au plan (YZ) dans lequel la chaîne (1) s'étend.
